# EUROPEAN PATENT SPECIFICATION

(11) **EP 0 697 612 B1**
(45) Date of publication and mention of the grant of the patent: **05.06.2002**
(21) Application number: 95117264.2
(22) Date of filing: 17.07.1992
(51) Int. Cl.: G02B 26/08, G09F 9/37

(54) **Process of applying color to the mirror elements of a deformable mirror device**
Verfahren zur Einfärbung von Spiegelelementen einer deformierbaren Spiegelanordnung
Procédé de teinture des miroirs d'un dispositif à miroir déformable

(30) Priority: 31.07.1991 US 739079
(43) Date of publication of application: 21.02.1996
(62) Divisional of application: 92112230.5
(73) Proprietor: TEXAS INSTRUMENTS INCORPORATED, Dallas Texas 75265 (US)
(72) Inventor: Mignardi, Michael A., Dallas, Texas (US); Story, Brooks J., Richardson, Texas (US)
(74) Representative: Schwepfinger, Karl-Heinz, Dipl.-Ing.

(56) References cited:
- US-A- 4 592 628
- US-A- 4 956 619

## Description

### TECHNICAL FIELD OF THE INVENTION

This invention relates generally to the field of electronic devices and more particularly to deformable mirror devices.

### BACKGROUND OF THE INVENTION

Deformable mirror devices ("DMDs") are semiconductor devices containing at least one row of deflectable mirrors. The mirror position, which is controlled electronically, determines the path of reflected incident light. Deformable mirror devices may be manufactured with any number of mirror rows. By using high density mirror arrays, reflected light from the individual mirrors can be combined to form visual images. See in this respect US 4 956 619 A and US 4 592 628 A. See also US 5 168 406 (published on 01.12.1992) related with the present invention.

The introduction of color to deformable mirror device systems has been problematic to date. One approach to full color deformable mirror device systems is to use three deformable mirror devices, each with a different primary color source or external color filter. The three monochrome deformable mirror device images are combined into a single image to produce the desired three color picture. This system has the disadvantages of complex chip alignment, output convergence, and excessive cost and package size of the related optic system.

The preferred approach to color light modulation, therefore, is to use a single deformable mirror device chip modified to produce the desired color image. Simply aligning a matrix of colored windows above the matrix of individual mirrors, however, is not satisfactory. The unmodulated light striking the deformable mirror device is supplied externally to the individual mirrors and off of the final viewing optical axis. Consequently, incident light would pass through the filter window structure twice before being observed with the possibility of passing through two different colored window elements. The optical alignment for using such an off-chip color filter window is complex.

Therefore a need has risen for a single chip deformable mirror device operable to accurately reproduce full color images.

### SUMMARY OF THE INVENTION

According to the invention, the process of applying color to the mirror elements of a deformable mirror device comprises the steps defined in claim 1.

One technical advantage of the disclosed invention is the ability to precisely and accurately place colors on individual mirror elements of a deformable mirror device. The particular colors may be arranged so as to create a full color display when viewed at the macroscopic level.

It is another technical advantage that the disclosed process applies a thin layer of dye-resist to the deformable mirror device array. The thinness of the layer minimizes the induced stresses within the mirror element.

### BRIEF DESCRIPTION OF THE DRAWINGS

For a more complete understanding of the present invention, and the advantages thereof, reference is now made to the following descriptions taken in conjunction with the accompanying drawings, in which:
FIGURE 1 shows a deformable mirror device in perspective;
FIGURE 2 depicts a diagrammatic view of a typical three-color pattern suitable for creating full color images;
FIGURE 3 depicts graphically a color transmission profile of three dyes suitable to create full color images when used jointly; and
FIGURES 4a-f depict cross-sectional side views of a deformable mirror device during various stages of fabrication.

### DETAILED DESCRIPTION OF THE INVENTION

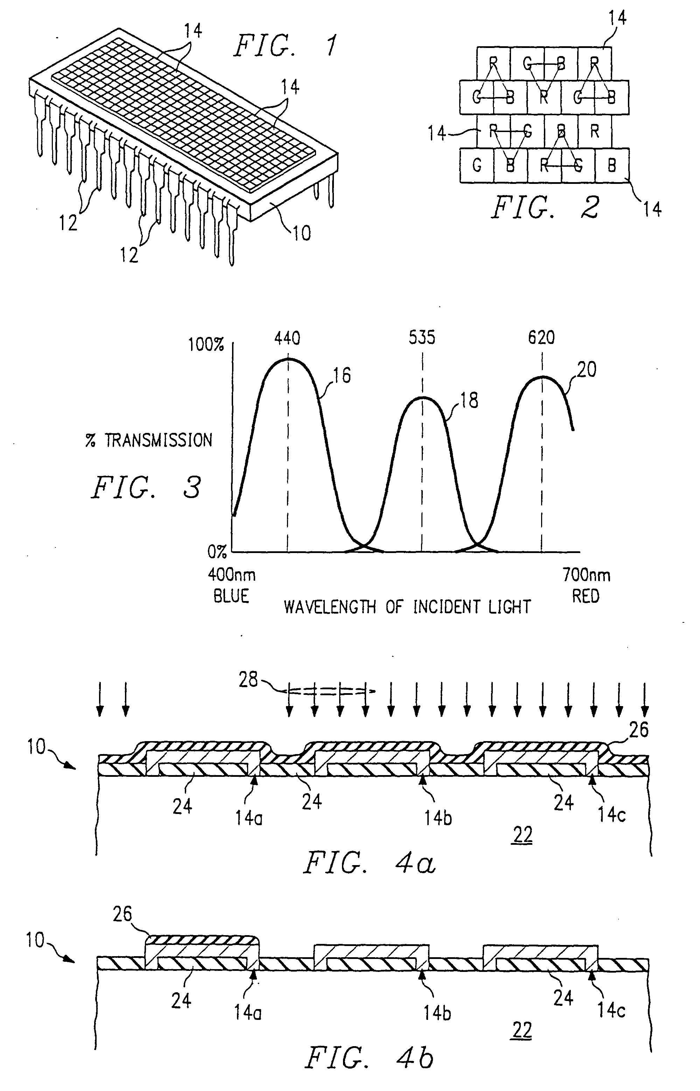

The preferred embodiment of the present invention is best understood by reference to FIGURES 1-4, like numerals corresponding to similar parts of the various drawings.

Heretofore, use of deformable mirror devices has been confined to monochromatic reflection of light. A more complete understanding of present-day deformable mirror devices and their use may be had by referring to "Spatial Light Modulator Printer and Method of Operation," U.S. Patent No. 4,662,746 to Hornbeck et al., filed October 30, 1985.

FIGURE 1 depicts schematically a deformable mirror device 10. Electronic control signals are input to DMD 10 through pins 12. DMD 10 comprises individually addressable mirror elements 14. In the present invention, mirror elements 14 may be produced in a wide variety of sizes but are typically 20 µm x 20 µm in size. Mirror elements 14 may be arranged in an n x m array as depicted in FIGURE 1, in a single thin line, or in several separate lines. In the present invention, mirror elements 14 are individually colored during the manufacturing process as will be more fully described below. By properly selecting the color pattern on mirror elements 14, and therefore the color of reflected incident light, DMD 10 may reflect white light to produce full color images.

FIGURE 2 illustrates one example of a three-color mapping scheme applicable to deformable mirror device 10 (FIGURE 1). In this scheme, "R" = red, "G" = green, and "B" = blue. By staggering the three primary colors on mirrors 14 as depicted, three individual mirrors may be operated jointly to produce a larger individual full color pixel. Three adjacent mirrors 14, as indicated by the overlying triangles, create a pixel which is capable of displaying any combination of the three colors.

FIGURE 3 depicts graphically the color transmission profile of a typical ternary system of primary colors that could be used in the staggered arrangement of FIGURE 2. Single color filters in this system would have transmission peaks centered around 440 (blue), 535 (green) or 620 (red) nanometers. These colors correspond to profiles 16, 18 and 20 respectively.

The anthraquinone and phthalocyanine families of organic dyes are suitable to produce light transmission profiles depicted by curve 16 in FIGURE 3 when applied to a mirrored surface. The azo family of organic dyes is suitable to produce light transmission properties depicted by curve 20. These two sets of dyes may be combined to form a dye with light transmission characteristics depicted by the central curve 18. The resist and dye are together dissolved by a suitable solvent such as toluene or xylene. The two may be combined in ratios varying from one-to-one to four-to-one (mass of resist to mass of dye) depending on desired color intensity.

### Example 1

(Blue dye-resist mixture). A solution is prepared comprising 1.46 grams of positive electron beam resist and 4.0 grams of toluene. A separate solution comprising 1.25 grams of Solvent Blue 35 dye, 1.0 gram of Solvent Blue 67 dye, and 29.9 grams of toluene is refluxed for four hours under nitrogen. Solvent Blue 35 may be obtained from BASF Corp. under the name of "SUDAN BLUE 670." Solvent Blue 67 may be obtained from the Ciba-Geigy Corp. under the name "ORASOL BLUE GN." The blue dye solution is cooled and filtered. After filtering, the total dissolved dye content is 6.8%. The resist solution and 15.0 grams of the blue dye solution are combined and filtered to remove any undissolved material. The resulting dyed resist solution is stirred uncovered until enough toluene evaporates to leave a total dissolved solids (polymer and dye) content of 27.8%. The blue dyed resist is deposited onto the DMD substrate by spin coating at 2000 RPM and baked in air for 30 minutes at 120 °C.

### Example 2

(Green dye-resist mixture). A solution is prepared comprising 1.9 grams of positive electron beam resist and 4.5 grams of toluene. A separate solution comprising 4.0 grams of Solvent Blue 67 dye, 3.0 grams of Solvent Yellow 56 dye, and 70 grams of toluene is refluxed for four hours under nitrogen. Solvent Yellow 56 may also be obtained from BASF under the name "SUDAN YELLOW 150." The green dye solution is cooled and filtered. After filtering, the total dissolved dye content is 7.5%. The resist solution and 23.0 grams of the green dye solution is combined and filtered to remove any undissolved material. The resulting dyed resist solution is stirred uncovered until enough toluene evaporates to leave a total dissolved solids (polymer and dye) content of 23%. The green dyed resist is deposited onto a substrate by spin coating at 2000 RPM and baked in air for 30 minutes at 120 °C.

### Example 3

(Red dye-resist mixture). A solution is prepared comprising 0.75 grams of positive electron beam resist and 1.83 grams of toluene. A separate solution comprising 2.5 grams of Solvent Red 24 dye and 20.0 grams of toluene is refluxed for sixteen hours under nitrogen. Solvent Red 24 may be obtained from BASF under the name "SUDAN RED 380." The red dye solution is cooled and filtered. After filtering, the total dissolved dye content is 11.1%. The resist solution and 3.42 grams of the red dye solution is combined and filtered to remove any undissolved material. The red dyed resist was deposited onto a substrate by spin coating at 1500 RPM and baked in air for 30 minutes at 120 °C.

FIGUREs 4a-f depict cross-sectional views of DMD 10 during various stages of fabrication. A more complete understanding of monochrome DMD fabrication may be had by referring to U.S. Patent No. 4,662,746 issued on May 5, 1987 to Hornbeck, entitled "Spatial Light Modulator and Method".

In FIGURE 4a, mirror elements 14a-c have been constructed on top of substrate 22 but sacrificial layer 24 has not been undercut at this stage. Substrate 22 contains but does not depict the circuitry necessary to control mirrors 14a-c according to input signals. A layer 26, comprising a mixture of resist and dye, is uniformly applied to DMD 10. The resulting dye-resist layer is typically from 1 to 3 microns in thickness. Layer 26 has the characteristic of one of the three colors depicted in connection with FIGURE 3. Layer 26 is then masked and exposed to, for example, ultraviolet light (indicated by arrows 28) such that when treated with an etchant or developer, layer 26 is removed from all mirrors not desired to be colored. In the example of FIGUREs 4a-f, layer 26 is part positive resist and will be removed from all mirrors except mirror 14a. Patterning of layer 26 results in the coating of approximately one-third of the mirrors with one component of the ternary color system.

FIGURE 4b depicts DMD 10 after layer 26 has been etched from all undesired mirrors.

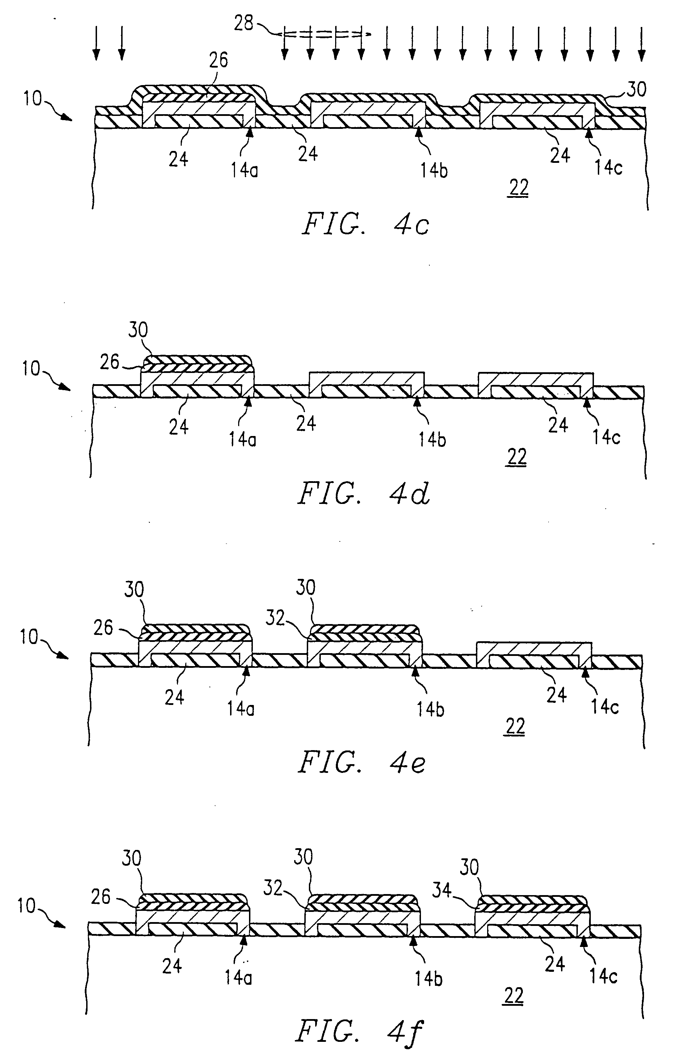

FIGURE 4c depicts DMD 10 after protective layer 30 has been deposited over the entire device. Layer 30 is then patterned using conventional microlithographic techniques such that only the mirrors previously coated with dye resist layer 26 (here mirror 14a) are covered with the protective coating. Protective layer 30 should be optically transparent, such as a thin layer of silicon dioxide. Protective layer 30 will protect layer 26 from being etched during subsequent processing steps. It may be possible to fabricate the colored mirrors without protective layer 30 by using etch-resistant resists.

FIGURE 4d depicts DMD 10 after protective layer 30 has been etched from all mirrors other than mirror 14a.

In FIGURE 4e, a second colored layer of dyed resist has been applied to DMD 10, patterned, and etched as described in connection with FIGURES 4a and 4b. Layer 32 comprises a resist and a dye or dyes necessary to form the second of the three color filters. After patterning, layer 32 covers the second third of the mirrors, corresponding to mirror 14b. Layer 32 is then coated by a protective layer 30 as described in connection with FIGURES 4c and 4d.

FIGURE 4f depicts the complete ternary color filter system for DMD 10. Here, the third layer of dyed resist, layer 34, has been applied to DMD 10, patterned and etched as described in connection with FIGURES 4a and 4b. Layer 34 comprises a resist and a dye or dyes necessary to form a third color filter. After patterning, layer 34 covers the final third of the mirrors, corresponding to 14c. Layer 34 is then coated by protective layer 30 as described in connection with FIGURES 4c and 4d.

Layers 26, 32 and 34 are deposited and patterned using conventional microlithographic techniques. Each layer, however, may be processed by different techniques, such as UV, deep UV, electron beam, ion beam, or x-ray lithography, and may comprise different resists.

The final stage in DMD fabrication is the undercutting of the mirrors. This is accomplished by removal of sacrificial layer 24 using selective etching techniques. The removal of layer 24 allows for bistable or tristable operation of the mirrors.

Although the present invention and its advantages have been described in detail, it should be understood the various changes, substitutions and alterations can be made herein without departing from the scope of the invention as defined by the appended claims.

## Claims

1. A process of applying color to the mirror elements (14; 14a-14c) of a deformable mirror device (10) comprising a semiconductor substrate (22) and an array of at least one row of deflectable mirror elements on the surface of said substrate, said process comprising the steps of:
forming a layer (26) of material comprising a dye of a first color and a resist over the surface of the deformable mirror device (10); and
patterning the layer (26) of material to leave the layer (26) of material on the mirror elements (14a) desired to be dyed with the first color and removing the layer (26) of material on the mirror elements (14b, 14c) not desired to be dyed with the first color.

2. The method of claim 1 further comprising the step of applying a transparent protective layer (30) over the remaining layer of material.

3. The method of claim 2, wherein said applying step further comprises the step of applying a layer of silicon dioxide.

4. The method of any preceding claim, wherein said forming step comprises the steps of:
combining a resist and a dye selected from the group consisting of anthraquinone, phthalocyanine, azo, and mixtures thereof; and
applying the combination of resist and selected dye to the surface of the deformable mirror device (10).

5. The method of claim 1 further comprising the steps of:
forming a second layer (32) of material comprising a dye of a second color and a resist over the surface of the deformable mirror device (10);
patterning the second layer (32) of material to leave the second layer (32) of material on the mirror elements (14b) desired to be dyed with the second color and removing the second layer (32) of material on the mirror elements (14a, 14c) not desired to be dyed with the second color;
forming a third layer (34) of material comprising a dye of a third color and a resist over the surface of the deformable mirror device (10); and
patterning the third layer (34) of material to leave the third layer (34) of material on the mirror elements (14c) desired to be dyed with the third color and removing the third layer (34) of material on the mirror elements (14a, 14b) not desired to be dyed with the third color.

6. The method of claim 5, wherein each of said forming steps further comprises the step of combining a resist and a dye selected from the group consisting of anthraquinone, phthalocyanine, azo, and mixtures thereof.

7. The method of claim 6, wherein each of said forming steps further comprises the step of aligning and removing the layers (32, 34) of material to form three-color pixels.

8. The method of claim 5, wherein each of said forming steps further comprises the step of forming a protective layer (30) over the remaining portions of said second and third layers (32, 34) of material.

9. The method of claim 8, wherein each of said forming steps further comprises the step of forming a protective layer of silicon dioxide over the remaining portions of said second and third layers (32, 34) of material.

## Patentansprüche

1. Verfahren zum Aufbringen von Farbe auf den Spiegelelementen (14; 14a-14c) einer deformierbaren Spiegelvorrichtung (10), die ein Halbleitersubstrat (22) und eine Rastergruppe aus wenigstens einer Reihe von auslenkbaren Spiegelelementen auf der Oberfläche des Substrats aufweist, wobei das Verfahren folgende Schritte umfaßt:
Ausbildung einer Schicht (26) eines Materials, das einen Farbstoff einer ersten Farbe und einen Fotolack enthält, über der Oberfläche der deformierbaren Spiegelvorrichtung (10); und
Ausbilden eines Musters auf der Materialschicht (26) in solcher Weise, daß sie auf denjenigen Spiegelelementen (14a) verbleibt, die mit der ersten Farbe eingefärbt werden sollen, und Entfernen der Materialschicht (26) auf den Spiegelelementen (14b, 14c), die nicht mit der ersten Farbe eingefärbt werden sollen.

2. Verfahren nach Anspruch 1, ferner mit dem Schritt des Aufbringens einer transparenten Schutzschicht (30) über der verbleibenden Materialschicht.

3. Verfahren nach Anspruch 2, bei welchem der Schritt des Aufbringens ferner den Schritt des Aufbringens einer Siliciumdioxid-Schicht umfaßt.

4. Verfahren nach einem der vorstehenden Ansprüche, bei welchem der Ausbildungsschritt folgende Schritte umfaßt:
Kombinieren eines Fotolacks und eines Farbstoffes, der aus der Gruppe ausgewählt ist, welche aus Anthraquinon, Phthalocyanin, Azo-Farbstoff und Gemischen davon besteht; und
Aufbringen der Kombination aus Fotolack und ausgewähltem Farbstoff auf der Oberfläche der deformierbaren Spiegelvorrichtung (10).

5. Verfahren nach Anspruch 1, ferner folgende Schritte umfassend:
Ausbilden einer zweiten Schicht (32) eines Materials, das einen Farbstoff einer zweiten Farbe und einen Fotolack enthält, auf der Oberfläche der deformierbaren Spiegelvorrichtung (10);
Ausbilden eines Musters auf der zweiten Materialschicht (32) in solcher Weise, daß die zweite Materialschicht (32) auf denjenigen Spiegelelementen (14b) verbleibt, die mit der zweiten Farbe eingefärbt werden sollen, und Entfernen der zweiten Materialschicht (32) auf denjenigen Spiegelelementen (14a, 14c), die nicht mit der zweiten Farbe eingefärbt werden sollen;
Ausbilden einer dritten Schicht (34) eines Materials, das einen Farbstoff einer dritten Farbe und einen Fotolack enthält, über der Oberfläche der deformierbaren Spiegelvorrichtung (10); und
Ausbilden eines Musters auf der dritten Materialschicht (34) in solcher Weise, daß die dritte Materialschicht (34) auf denjenigen Spiegelelementen (14c) verbleibt, die mit der dritten Farbe eingefärbt werden sollen, und Entfernen der dritten Materialschicht (34) auf denjenigen Spiegelelementen (14a, 14b), die nicht mit der dritten Farbe eingefärbt werden sollen.

6. Verfahren nach Anspruch 5, bei welchem jeder der Ausbildungsschritte ferner den Schritt des Kombinierens eines Fotolacks und eines Farbstoffs umfaßt, der aus der Gruppe ausgewählt ist, welche aus Anthraquinon, Phthalocyanin, Azo-Farbstoff und Gemischen derselben besteht.

7. Verfahren nach Anspruch 6, bei welchem jeder der Ausbildungsschritte ferner den Schritt des Ausrichtens und des Entfernens der Materialschichten (32, 34) zur Bildung von dreifarbigen Pixeln umfaßt.

8. Verfahren nach Anspruch 5, bei welchem jeder der Ausbildungsschritte ferner den Schritt des Bildens einer Schutzschicht (30) über den verbleibenden Teilen der zweiten und der dritten Materialschicht (32, 34) umfaßt.

9. Verfahren nach Anspruch 8, bei welchem jeder der Ausbildungsschritte ferner den Schritt des Bildens einer Schutzschicht aus Siliciumdioxid über den verbleibenden Teilen der zweiten und der dritten Materialschicht (32, 34) umfaßt.

## Revendications

1. Procédé pour appliquer de la couleur aux éléments de miroir (14; 14a-14c) d'un dispositif miroir déformable (10) comprenant un substrat semi-conducteur (22) et un réseau d'au moins une ligne d'éléments de miroir déviables sur la surface dudit substrat, ledit procédé comprenant les étapes suivantes :
une étape de formation d'une couche (26) d'un matériau comprenant une teinture d'une première couleur et un vernis photosensible sur la surface du dispositif miroir déformable (10) ; et
une étape de modelage de la couche (26) de matériau pour laisser la couche (26) de matériau sur les éléments de miroir (14a) que l'on désire teinter avec la première couleur et retirer la couche (26) de matériau sur les éléments de miroir (14b, 14c) que l'on ne désire pas teinter avec la première couleur.

2. Procédé selon la revendication 1, comprenant en outre une étape d'application d'une couche protectrice transparente (30) sur le reste de la couche de matériau.

3. Procédé selon la revendication 2, dans lequel ladite étape d'application comprend en outre l'étape d'application d'une couche de dioxyde de silicium.

4. Procédé selon l'une quelconque des revendications précédentes, dans lequel ladite étape de formation comprend les étapes suivantes :
une étape de combinaison d'un vernis et d'une teinture sélectionnée dans le groupe constitué d'anthraquinone, de phthalocyanine, d'azoïque, et de mélanges de ceux-ci ; et
une étape d'application de la combinaison de vernis photosensible et de la teinture sélectionnée sur la surface du dispositif miroir déformable (10).

5. Procédé selon la revendication 1, comprenant en outre les étapes suivantes :
une étape de formation d'une seconde couche (32) de matériau comprenant une teinture d'une seconde couleur et un vernis sur la surface du dispositif miroir déformable (10) ;
une étape de modelage de la seconde couche (32) de matériau pour laisser la seconde couche (32) de matériau sur les éléments de miroir (14b) que l'on désire teinter avec la seconde couleur et retirer la seconde couche (32) de matériau sur les éléments de miroir (14a, 14c) que l'on ne désire pas teinter avec la seconde couleur ;
une étape de formation d'une troisième couche (34) de matériau comprenant une teinture d'une troisième couleur et un vernis photosensible sur la surface du dispositif miroir déformable (10) ; et
une étape de modelage de la troisième couche (34) de matériau pour laisser la troisième couche (34) de matériau sur les éléments de miroir (14c) que l'on désire teinter avec la troisième couleur et retirer la troisième couche (34) de matériau sur les éléments de miroir (14a, 14b) que l'on ne désire pas teinter avec la troisième couleur.

6. Procédé selon la revendication 5, dans lequel chacune desdites étapes de formation comprend en outre une étape de combinaison d'un vernis et d'une teinture sélectionnée dans le groupe constitué de d'anthraquinone, de phthalocyanine, d'azoïque, et de mélanges de ceux-ci.

7. Procédé selon la revendication 6, dans lequel chacune desdites étapes de formation comprend en outre une étape d'alignement et de retrait des couches (32, 34) de matériau pour former des pixels trois couleurs.

8. Procédé selon la revendication 5, dans lequel chacune desdites étapes de formation comprend en outre une étape de formation d'une couche protectrice (30) sur les portions restantes desdites seconde et troisième couches (32, 34) de matériau.

9. Procédé selon la revendication 8, dans lequel chacune desdites étapes de formation comprend en outre une étape de formation d'une couche protectrice de dioxyde de silicium sur les portions restantes desdites seconde et troisième couches (32, 34) de matériau.
